(19) Europäisches Patentamt
European Patent Office
Office européen des brevets

(11) EP 0 839 820 A2

(12) # EUROPÄISCHE PATENTANMELDUNG

(43) Veröffentlichungstag:
**06.05.1998 Patentblatt 1998/19**

(51) Int. Cl.[6]: **C07F 9/6581**, C08G 79/02

(21) Anmeldenummer: **97117913.0**

(22) Anmeldetag: **16.10.1997**

(84) Benannte Vertragsstaaten:
**AT BE CH DE DK ES FI FR GB GR IE IT LI LU MC NL PT SE**
Benannte Erstreckungsstaaten:
**AL LT LV RO SI**

(30) Priorität: **04.11.1996 DE 19645340**

(71) Anmelder:
**Daimler-Benz Aktiengesellschaft**
**70546 Stuttgart (DE)**

(72) Erfinder:
- **Raith, Thomas, Dr.**
  **73249 Wernau (DE)**
- **Nuding, Wolfgang**
  **89081 Ulm (DE)**

(54) **Aushärtbare Zusammensetzungen mit Phosphazenderivat und Vernetzer**

(57) Die Erfindung behandelt aushärtbare Zusammensetzungen, die im nicht gehärteten Zustand als wesentlicher Bestandteil wenigstens ein Phosphazenderivat der allgemeinen Formel $[NP\text{-}(\text{-}X\text{-}Y\text{-}Z)_2]_n$ enthalten und wenigstens ein Vernetzer mit wenigstens zwei unter den Resten Z ausgewählten funktionellen Gruppen, die mit den funktionellen Resten Z des Phosphazenderivates reagieren können, vorgesehen ist, worin

X Reste aus der Gruppe -O-, -S-, -NH- oder -NR- sind, vorzugsweise Sauerstoff,
Y aliphatische, cycloaliphatische, aromatische und/oder heteroaromatische Kohlenwasserstoffgruppen sind,
Z funktionelle Reste aus der Gruppe -OH, $-NH_2$, -NCO, -COOH, - CHO, $-CH=CH_2$, Allyl, N-Methylol, Acrylat, Methacrylat, Silyl, Glycidyl oder Epoxy sind oder Vorstufen der Reste aus dieser Gruppe oder durch Schutzgruppen blockierte Reste aus dieser Gruppe, vorzugsweise Acrylat- oder Methacrylatreste und
n eine ganze Zahl von mindestens 3 bis höchstens 10 bedeutet.

Die NP-Reste der obigen Formel sind vorzugsweise zu einem Phosphazenring zusammengefügt, wobei n 3 oder 4 ist. Die Phosphazenderivate können zur Herstellung von aushärtbaren Lacken, Beschichtungs- oder Füllmittel, Spachtelmasse, Klebstoffe, Formteile oder Folien verwendet werden.

EP 0 839 820 A2

## Beschreibung

Bekannte härtbare Phosphazenverbindungen weisen wenigstens eine ethylenisch ungesättigte Seitengruppe auf, die radikalisch oder ionisch polymerisierbar ist. Beispiele für am häufigsten als polymerisierbare Seitengruppe verwendete Ethylenderivate sind Acryl-, Methacryl-, Vinyl-, Allyl- oder Styrolreste.

Die EP-A-0 557 943 beschreibt durch radikalische Polymerisation aushärtbare Phosphazenverbindungen mit wenigstens einer ethylenisch ungesättigten, polymerisierbaren Seitengruppe, deren Polymerisation durch Zugabe von Initiatoren oder durch Elektronenstrahlen initiiert wird. In der EP-A-0 368 165 sind härtbare Harzzusammensetzungen beschrieben, die eine härtbare Phosphazenverbindung mit wenigstens einer ethylenisch ungesättigten, polymerisierbaren Seitengruppe enthalten und als weitere wesentliche Bestandteile eine Pentaerythritolacrylatverbindung und/oder eine Bis-(4-acryloxydialkoxyphenyl)-alkanverbindung. Die Polymerisation dieser Harzzusammensetzungen erfolgt durch Erhitzen oder ultraviolette bzw. Elektronenstrahlung.

Als wesentliche Bestandteile aushärtbarer Zusammensetzungen weisen die bekannten, radikalisch polymerisierbaren Phosphazenverbindungen eine Reihe von Nachteilen auf. Sie neigen beispielsweise zu vorzeitiger Polymerisation, so daß den Zusammensetzungen Stabilisatoren zugegeben und hohe Temperaturen vermieden werden müssen. Dies hat wiederum Nachteile für die Lagerbeständigkeit und die Auswahl der Synthesebedingungen zur Folge. Bei der Synthese müssen milde Reaktionsbedingungen gewählt werden, was die Ausbeute reduziert, da unter diesen Reaktionsbedingungen häufig keine vollständige Substitution der Chlorreste am Ausgangsphophazen durch die Seitengruppen erreicht wird.

Die synthetisierten Phosphazenderivate sind daher in der Regel nicht chlorfrei, was ebenfalls unerwünscht ist. Die in der Regel radikalisch ablaufende Polymerisationsreaktion der bekannten Phosphazenderivate wird durch Luftsauerstoff inhibiert, weshalb hohe Mengen an Initiator eingesetzt werden müssen, um eine akzeptable Aushärtung der Lackoberfläche zu erreichen. Besonders die thermische Aushärtung führt häufig zu unvollständig ausgehärteten Oberflächen. Bei der Aushärtung radikalisch polymerisierender Phosphazenharze tritt häufig eine starke Schrumpfung auf, die zur Haftungsverschlechterung und Rißbildung führt, weshalb solche Phosphazenderivate oder Gemische derselben für viele Anwendungszwecke, wie beispielsweise als Lacke, Spachtel oder Beschichtungsmittel, ungeeignet sind. Zur Vermeidung der Schrumpfung werden häufig große Mengen an schrumpfungsarmen Zusätzen verwendet, die die Materialeigenschaften des ausgehärteten Endprodukts jedoch in anderer Weise nachteilig beeinflussen können. Die EP-A-0 557 943 beschreibt beispielsweise die Verwendung von Methacrylatderivaten oder halogenierten Polyestern als schrumpfungsmindernde Zusätze. Reine Phosphazenharze, wie sie beispielsweise in der EP-A-0 368 165 beschrieben sind, haben häufig den Nachteil, daß ihre Aushärtung sehr langsam verläuft. Werden radikalisch polymerisierbare Phosphazenderivate in Lacken oder Beschichtungsmitteln verwendet, so führt die Anwesenheit von Radikalen häufig zu Verfärbungen, die auch oft erst im Laufe der Alterung der Beschichtungen auftreten können.

Der vorliegenden Erfindung lag die Aufgabe zugrunde, neue aushärtbare Zusammensetzungen zu schaffen, die die aufgezeigten Nachteile des Standes der Technik vermeiden und ausgehärtete Produkte mit verbesserten Eigenschaften liefern. Insbesondere sollte ein radikalischer Reaktionsmechanismus bei der Aushärtung der Zusammensetzungen vermieden werden.

Diese Aufgabe wird durch aushärtbare Zusammensetzungen gelöst, die im nichtgehärteten Zustand als wesentlichen Bestandteil wenigstens ein Phosphazenderivat der allgemeinen Formel $[NP\text{-}(\text{-}X\text{-}Y\text{-}Z)_2]_n$ enthalten, worin

- X gleiche oder verschiedene Reste aus der Gruppe -O-, -S-, - NH- oder -NR- (R= $C_1$-$C_6$-Alkyl) sind,
- Y gleiche oder verschiedene, gegebenenfalls O, S und/oder N enthaltende, aliphatische, cycloaliphatische, aromatische und/oder heteroaromatische Kohlenwasserstoffgruppen sind,
- Z gleiche oder verschiedene funktionelle Reste aus der Gruppe -OH, $-NH_2$, -NCO, -COOH, -CHO, $-CH{=}CH_2$, Allyl, N-Methylol, Acrylat, Methacrylat, Silyl, Glycidyl oder Epoxy sind oder Vorstufen der Reste aus dieser Gruppe oder durch Schutzgruppen blockierte Reste aus dieser Gruppe, wobei höchstens vier Reste Z auch -H sein können, und
- n eine ganze Zahl von mindestens 3 bis höchstens 10 bedeutet,

und wenigstens ein Vernetzer mit wenigstens zwei unter den Resten Z ausgewählten funktionellen Gruppen, die mit den funktionellen Resten Z des Phosphazenderivates reagieren können, vorgesehen ist.

Die Aushärtung der erfindungsgemäßen Zusammensetzungen erfolgt durch Polykondensations- oder Polyadditionsreaktionen der reaktiven Seitengruppen des Phosphazenderivats mit denen des Vernetzers oder auch über einen gemischten Reaktionsmechanismus, der zusätzlich zu den vorgenannten noch einen radikalischen Reaktionsweg umfaßt. Da weder das Phosphazenderivat noch der Vernetzer ausschließlich radikalisch polymerisierbare Seitengruppen tragen, tritt eine solche mit den oben beschriebenen Nachteilen verbundene Reaktion nicht ein. Wichtig ist, daß die

funktionellen Reste des Phosphazenderivats einerseits und des Vernetzers andererseits so ausgewählt werden, daß sie miteinander reagieren und wenigstens ein Kondensations- oder Additionsprodukt liefern. Zweckmäßig ist es auch, verschiedene Phosphazenderivate mit gleichen oder verschiedenen funktionellen Resten einzusetzen. Werden Phosphazenderivate mit verschiedenen reaktiven Resten verwendet, so können diese so ausgewählt sein, daß sie ausschließlich mit den Resten der anderen Phosphazenderivate, ausschließlich mit den reaktiven Resten eines Vernetzers oder mit beiden reagieren können. Gleiches gilt auch für die verwendeten Vernetzer. Auch hier können verschiedene Vernetzer mit gleichen oder unterschiedlichen reaktiven Resten eingesetzt werden, die entsprechend dem Vorgenannten ausschließlich mit Phosphazenderivaten, ausschließlich mit anderen Vernetzern oder mit beidem reagieren können. Durch die vielfältigen Variationsmöglichkeiten können dadurch die Produkteigenschaften entsprechend den Anforderungen beliebig beeinflußt werden.

Zweckmäßig ist es auch als Reste Z Vorstufen funktioneller Gruppen oder durch Schutzgruppen blockierte funktionelle Gruppen einzusetzen, wenn die Gefahr besteht, daß die funktionellen Gruppen bereits bei der Synthese der entsprechenden Verbindungen oder beim Vermischen mit anderen Verbindungen vorzeitig oder in unerwünschter Weise abreagieren. Als Schutzgruppen für Isocyanatreste sind beispielsweise ε-Caprolactame, Butanonoxime und Malonsäurediethylester besonders geeignet. Beispiele für Vorstufen funktioneller Reste Z sind Nitratreste als Vorstufe von Aminogruppen oder Allylreste für Epoxygruppen. Für die Polymerisation von Silylgruppen erforderliche Hydroxygruppen lassen sich beispielsweise vor der eigentlichen Kondensationsreaktion durch Acetyl- oder Aminoreste schützen. Die Abspaltung der Schutzgruppen kann dann durch Hydrolyse nach folgendem Schema ablaufen:

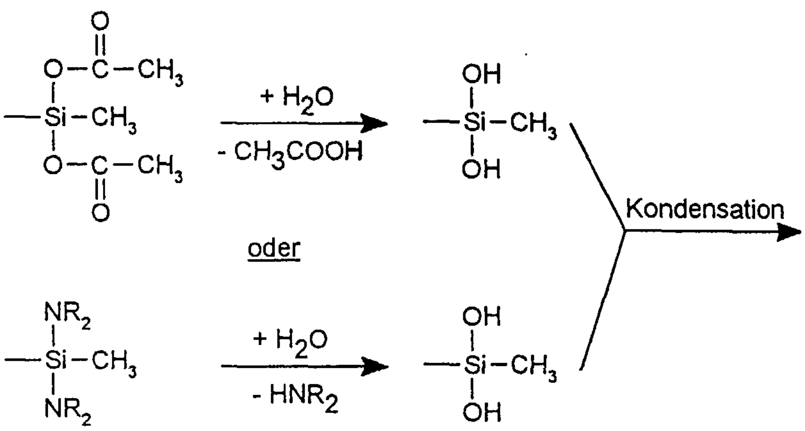


Eine bevorzugte Ausführungsform der Erfindung ist dadurch gekennzeichnet, daß die NP-Reste der obigen Formel zu einem Phosphazenring mit abwechselnden N- und P-Atomen zusammengefügt sind und n 3 oder 4, besonders bevorzugt 3 ist. Bei besonders geeigneten Phosphazenderivaten ist der Rest X Sauerstoff und/oder der Rest Y der obigen Formel lineares oder verzweigtes $C_1$-$C_{10}$-Alkylen, $C_1$-$C_{10}$-Oxyalkylen, $C_1$-$C_{10}$-Alkylenphenyl, $C_1$-$C_{10}$-Alkylencarboxyphenyl, Phenylen, Biphenylen, Alkoxyphenylen oder Oxyphenylen. Als besonders geeignete Reste Y haben sich

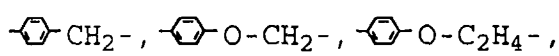

1,4-Phenylen, $C_1$-$C_{10}$-Alkylphenylen oder $C_1$-$C_{10}$-Alkylcarboxylphenylen erwiesen.

Bei einer besonderen Ausführungsform der Erfindung ist n gleich 3 und 2, 3 oder 4 der Reste Z sind Acrylat- oder Methacrylatreste. Man erhält so Verbindungen, die sich vorteilhaft in einem mehrstufigen Verfahren polymerisieren lassen, und zwar über einen radikalischen Reaktionsmechanismus der Acrylat- oder Methacrylatreste einerseits und eine Polykondensation oder Polyaddition der übrigen Reste andererseits.

Die erfindungsgemäßen Phosphazenderivate lassen sich in hohen Ausbeuten unter vollständiger Substitution des Phosphazens und damit chlorfrei herstellen. Die Aushärtung der erfindungsgemäßen Phosphazenderivate wird nicht durch Sauerstoff inhibiert, und selbst dünne Beschichtungen werden in Gegenwart von Luftsauerstoff vollständig ausgehärtet, was insbesondere die thermisch oder ionisch initiierte Aushärtung ermöglicht. Die Aushärtung der erfindungsgemäßen Zusammensetzungen erfolgt zweckmäßig erst nach der Applikation auf einem Substrat. Sie besitzen keine oder wenigstens verminderte Neigung zur Verfärbung der ausgehärteten Produkte, weshalb sie u. a. auch besonders für klare oder helle Lacke, Beschichtungen, Füllmittel, Spachtel und Klebstoffe geeignet sind, bei denen es neben den funktionellen auch auf die optischen Eigenschaften ankommt.

Ein besonderer Vorteil der erfindungsgemäßen Zusammensetzungen ist auch deren geringe Schrumpfungsneigung. Lacke und andere Oberflächenbeschichtungen, die als wesentlichen Bestandteil aushärtbare Zusammensetzungen der vorliegenden Erfindung enthalten, zeigen sehr gute Haftungseigenschaften und bilden keine Risse.

Alle diese Eigenschaften machen die erfindungsgemäßen aushärtbaren Zusammensetzungen als Binder oder Härter für Lacke, Beschichtungsmittel, Füllmittel, Spachtelmassen, Klebstoffe, Formteile oder Folien geeignet. Besonders vorteilhaft ist ihre Verwendung in Klarlacken für die Außenlackierung oder für die Lackierung auf Holzeinbauteilen in Fahrzeugen, in Klarlacken für Scheinwerferstreulichtscheiben aus Polycarbonat oder dergleichen.

Den aushärtbaren Zusammensetzungen der vorliegenden Erfindung können zusätzlich übliche Zusatzstoffe, wie Initiatoren, Pigmente, Verlaufshilfsmittel, Farbstoffe, UV-Stabilisatoren, Füllstoffe oder dergleichen zugesetzt werden.

Die Struktur der Phosphazenderivate kann im nichtgehärteten Zustand der Zusammensetzungen ring- oder kettenförmig sein, besitzt aber in jedem Fall ein Grundgerüst mit abwechselnden Stickstoff- und Phosphoratomen. Bevorzugt sind jedoch die Ringverbindungen mit 3 oder 4 NP-Resten, wobei der 6-Ring mit 3 N- und 3 P-Atomen besonders bevorzugt ist.

Die erfindungsgemäßen Phosphazenderivate lassen sich herstellen, indem man ein Chlorphosphazen mit einer Verbindung der allgemeinen Formel M-(-X-Y-Z) umsetzt, worin X, Y und Z wie oben definiert sind, d. h. Z ein funktioneller Rest oder eine Vorstufe eines reaktiven Restes oder ein mit einer Schutzgruppe versehener Rest ist und M ein Wasserstoffatom, ein Alkalimetall, ein Erdalkalimetall oder einen Basenrest bedeutet. Der Basenrest M kann beispielsweise ein Pyridylrest oder Tertiäraminorest, wie Triethylaminorest, oder der Rest von 1,8-Diazabicyclo-(5,4,0)-undec-7-en(1,5-5) sein. Bevorzugt ist M Natrium. Die Verbindungen M-(-X-Y-Z) können durch Umsetzung der Verbindungen H-(-X-Y-Z) mit Natriumhydrid, Natriummetall, Natriumhydroxid oder Natriumcarbonat erhalten werden, wie beispielswiese gemäß dem Verfahren der US-A-4 775 732. Als Vorstufen oder als mit Schutzgruppen versehene Reste funktioneller Gruppen Z eignen sich beispielsweise Methoxy-, Benzyl-, Aldehyd-, Amino-, Allyl-, 3,4-Dihydro-2H-Pyranyl- (DHP), Nitro- oder Ethylesterreste Die Umsetzungsprodukte lassen sich durch die allgemeine Formel $[NP\text{-}(X\text{-}Y\text{-}Z)_2]_n$ beschreiben. Sind die Gruppen Z mit Schutzgruppen blockiert, so werden diese nach üblichen Verfahren in die reaktive Form umgewandelt.

Als inertes Lösungsmittel, in welchem die Umsetzung durchgeführt wird, kommen beispielsweise Tetrahydrofuran, Toluol, Dimethylsulfoxid, Dimethylformamid, Chloroform, Methylenchlorid oder Pyridin in Betracht. Die Reaktionstemperatur liegt zweckmäßig zwischen 15 und 110 °C, wobei niedrigere Temperaturen längere Reaktionszeiten erfordern.

Im folgenden sind einige Beispiele für erfindungsgemäß geeignete Phosphazenderivate als Strukturformeln wiedergegeben.

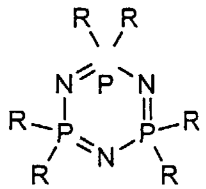

-R = -X-Y-Z =

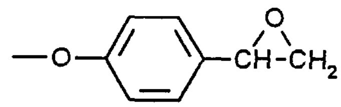

—O—$(CH_2)_6$—NCO

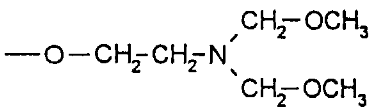

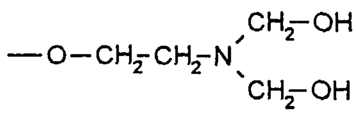

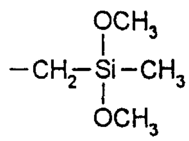

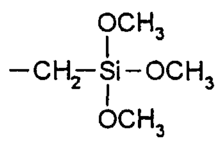

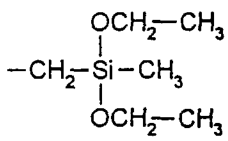

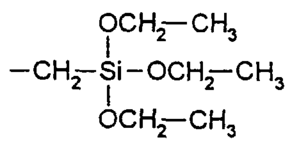

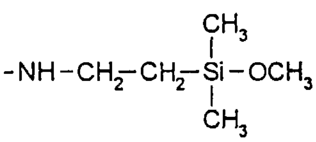

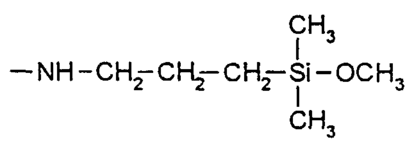

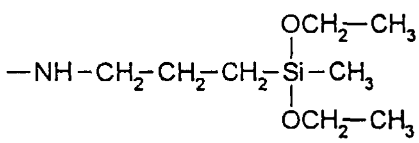

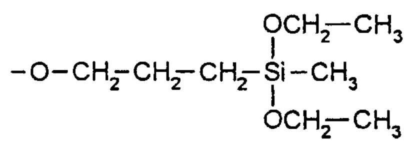

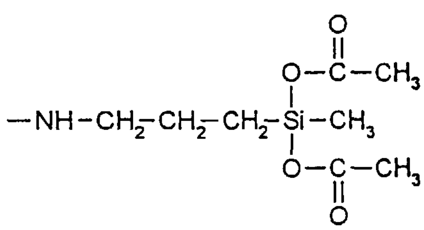

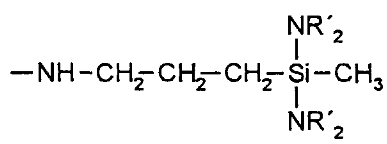

R′ = -H, Methyl, Ethyl, Propyl ...

Durch die folgenden Beispiele wird die Erfindung weiter erläutert.

**Beispiel 1**

Phosphazene mit funktionellen Hydroxygruppen:

a) 2,2,4,4,6,6-Hexakis-(4-hydroxyphenoxy)-cyclotriphosphazatrien $[NP(OC_6H_4OH)_2]_3$

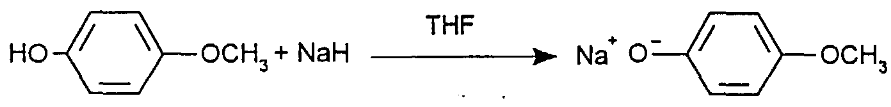


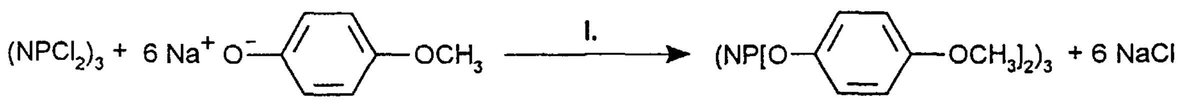


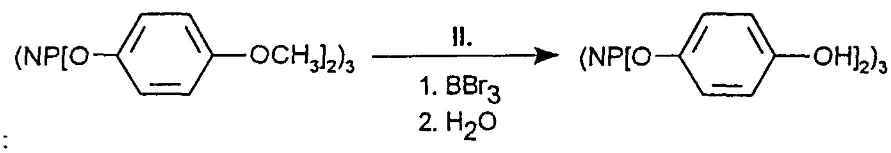


Die Umsetzung I ist bei B. W. Fitzsimmons, R. A. Shaw, J. Chem. Soc., London, S. 1735-1741, 1964 und Umsetzung II bei A. Medici, G. Fantin, P. Pedrini, M. Gleria, F. Minto, Macromolecules 25, Nr. 10, S. 2569-2574, 1992, beschrieben. Ein alternativer Syntheseweg für die Hydrochinonhydroxygruppe mit Hilfe einer Benzylschutzgruppe ist ebenfalls in der letztgenannten Literaturstelle für Umsetzung II offenbart.

b) 2,2,4,4,6,6-Hexakis-(4-hydroxymethylphenoxy)-cyclotriphosphazatrien $[NP(OC_6H_4CH_2OH]_2)_3$

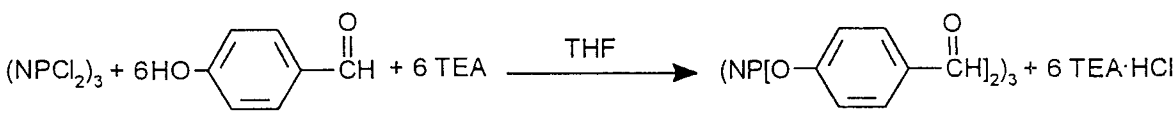


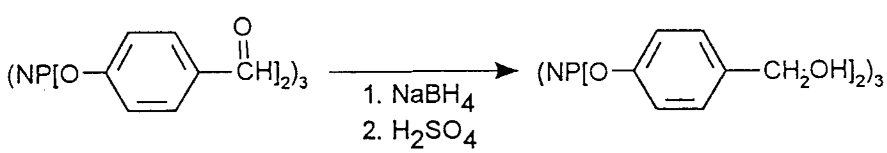


Die Reaktionen sind bei M. Gleria, S. Lora, F. Minto, L. Busulini, P. Paolucci, La Chimica et l'Industria, Band 63, Nr. 11, S. 719-722, Nov. 1981 beschrieben. Alternativ kann die Reaktion in einer Einschrittsynthese unter Verwendung des Phasentransferkatalysators Tetrabutylammoniumbromid auf folgendem Syntheseweg durchgeführt werden:

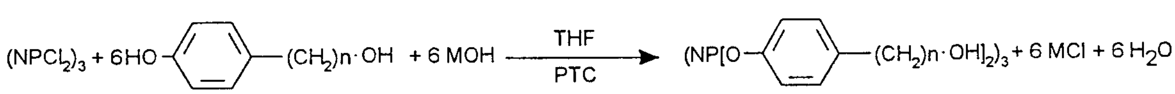


PTC = Phasentransferkatalysator Tetrabutylammoniumbromid

c) 2,2,4,4,6,6-Hexakis-(hydroxyalkyloxy)-cyclotriphosphazatrien $[NP(O(CH_2)_nOH)_2]_3$

$$HO—(CH_2)_n—OH + DHP \rightarrow THP—O—(CH_2)_n—OH$$

$$THP—O—(CH_2)n—OH + NaH \rightarrow 6Na^+O^-—(CH_2)n—O—THP + H_2$$

$$(NPCl_2)_3 + 6\ Na^+O^- — (CH_2)n — O — THP \rightarrow (NP[O — (CH_2)n — O — THP]_2)_3 + 6\ NaCl$$

$$(NP[O — (CH_2) — n\text{-}O — THP]_2)_3 \xrightarrow{HCl} (NP[O — (CH_2)n — O — OH]_2)_3$$

DHP = 3,4-Dihydro-2H-pyran

Die Reaktionen sind bei H. R. Allcock, C. G. Cameron, Macromolecules 27, S. 3125-3130, 1994 beschrieben.

**Beispiel 2**

Phosphazene mit funktionellen Epoxygruppen:

a) 2,2,4,4,6,6-Hexakis-(4-epoxymethoxyphenoxy)-cyclotriphosphazatrien $[NP(OC_6H_4OC_3H_5O]_2)_3$

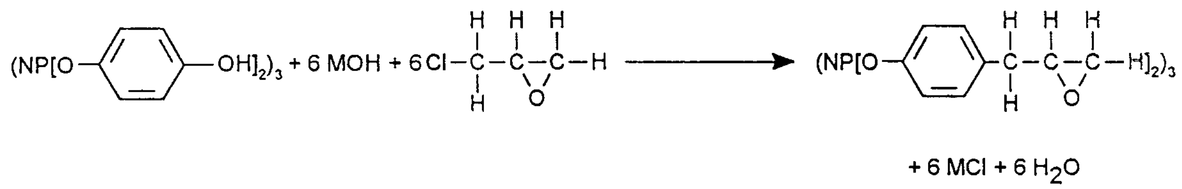

Die Reaktion ist bei G. Fantin, A. Medici, M. Fogagnolo, P. Petrini, M. Gleria, R. Bertani, G. Facchin, Europ. Polym. J., Band 29, Nr. 12, S. 1571-1579, 1993 beschrieben. In der gleichen Literaturstelle ist ein weiterer Syntheseweg für obengenanntes Phosphazen nach folgendem Schema beschrieben:

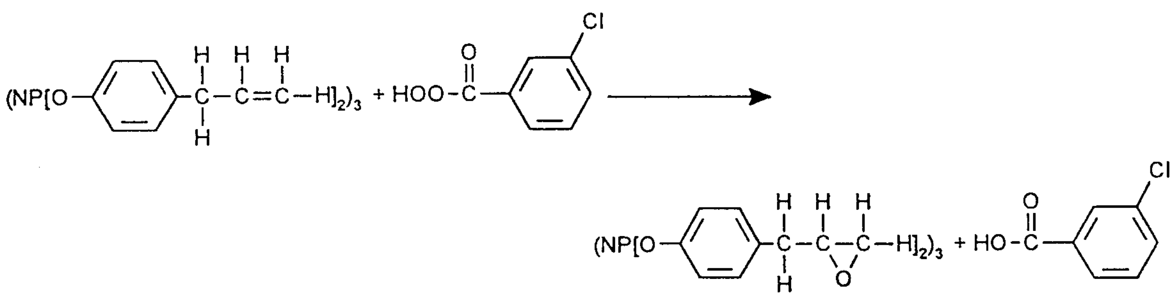

b) 2,2,4,4,6,6-Hexakis-(4-undecanoyloxyphenoxyoxid)-cyclotriphosphazatrien $[NP(OC_6H_4OC(O)(CH_2)_7C_3H_5O]_2)_3$

Die Synthese dieser Verbindung ist ebenfalls bei G. Fantin, A. Medici, M. Fogagnolo, P. Petrini, M. Gleria, R. Bertani, G. Facchin, Europ. Polym. J., Band 29, Nr. 12, S. 1571-1579, 1993 beschrieben.

**Beispiel 3**

Phosphazene mit funktionellen Aminogruppen:

a) 2,2,4,4,6,6-Hexakis-(4-aminophenoxy)-cyclotriphosphazatrien $[NP(OC_6H_4NH_2)_2]_3$

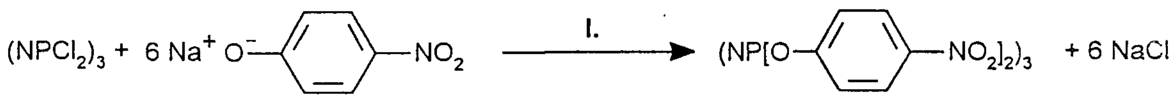


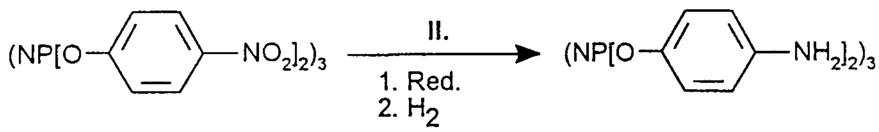


Die Reaktion VII ist bei E. Kober, H. Lederle, G. Ottmann, Inorg. Chem. 5, S. 2239, 1966 und die Reaktion VIII bei G. Ottmann, H. Lederle, H. Hooks Jr., E. Kober, Inorg. Chem. 6, S. 293, 1967, beschrieben.

b) Durch analoge Reaktionen lassen sich 2,2,4,4,6,6-Hexakis-[(4-aminophenyl)-alkylamino]-cyclotriphosphazatrien-Verbindungen der Formel $[NP(NH(CH_2)_nC_6H_4NH_2)_2]_3$ synthetisieren, wobei n eine ganze Zahl von 1 bis 10 bedeutet.

**Beispiel 4**

Phosphazene mit funktionellen Isocyanatgruppen:

2,2,4,4,6,6-Hexakis-(4-isocyanatophenoxy)-cyclotriphosphazatrien $[NP(OC_6H_4NCO)_2]_3$

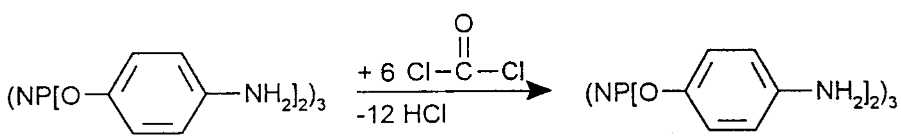


Die Reaktion ist bei G. Ottmann, H. Lederle, H. Hooks Jr., E. Kober, Inorg. Chem. 6, S. 394, 1967, beschrieben.

**Beispiel 5**

Phosphazene mit funktionellen Carbonsäuregruppen:

a) 2,2,4,4,6,6-Hexakis-(4-carboxyphenoxy)-cyclotriphosphazatrien $[NP(OC_6H_4COOH)_2]_3$

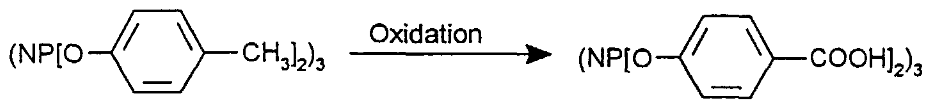


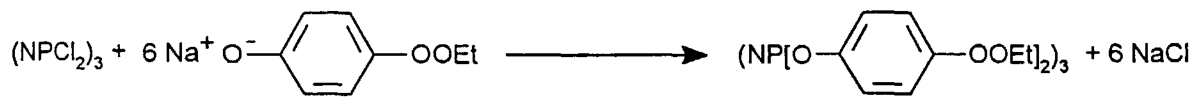

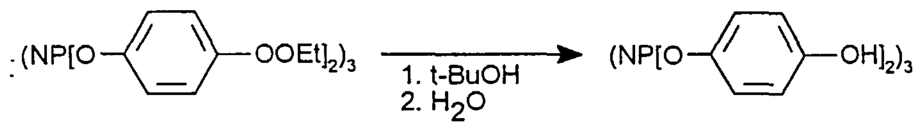


Diese und analoge Umsetzungen zyklischer Phosphazene sind bei H. R. Allcock, Advances in Chemistry Series (ACS), Band 248, S. 3-29, 1995, beschrieben.

b) 2,2,4,4,6,6-Hexakis-[4-(2-carboxyvinylen)phenoxy]-cyclotriphosphazatrien $[NP(OC_6H_4C_2H_4COOH)_2]_3$

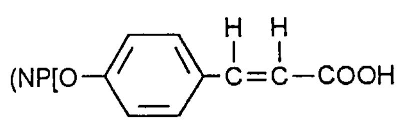

Die Synthese dieser Verbindung ist bei M. Gleria, S. Lora, F. Minto, L. Busulini, p. Paolucci, La Chimica et l'Industria, Band 63, Nr. 11, S. 719-722, Nov. 1981, beschrieben.

## Patentansprüche

**1.** Aushärtbare Zusammensetzungen, **dadurch gekennzeichnet, daß** im nicht gehärteten Zustand als wesentlicher Bestandteil wenigstens ein Phosphazenderivat der allgemeinen Formel $[NP\text{-}(\text{-}X\text{-}Y\text{-}Z)_2]_n$ enthalten ist, worin

X gleiche oder verschiedene Reste aus der Gruppe -O-, -S-, -NH- oder -NR- (R= $C_1$-$C_6$-Alkyl) sind,

Y gleiche oder verschiedene, gegebenenfalls O, S und/oder N enthaltende, aliphatische, cycloaliphatische, aromatische und/oder heteroaromatische Kohlenwasserstoffgruppen sind,

Z gleiche oder verschiedene funktionelle Reste aus der Gruppe -OH, $-NH_2$, -NCO, -COOH, -CHO, $-CH=CH_2$, Allyl, N-Methylol, Acrylat, Methacrylat, Silyl, Glycidyl oder Epoxy sind oder Vorstufen der Reste aus dieser Gruppe oder durch Schutzgruppen blockierte Reste aus dieser Gruppe, wobei höchstens vier Reste Z auch -H sein können, und

n eine ganze Zahl von mindestens 3 bis höchstens 10 bedeutet,
und wenigstens ein Vernetzer mit wenigstens zwei unter den Resten Z ausgewählten funktionellen Gruppen, die mit den funktionellen Resten Z des Phosphazenderivates reagieren können, vorgesehen ist.

**2.** Zusammensetzungen nach Anspruch 1,
**dadurch gekennzeichnet,**
daß daß die NP-Reste der obigen Formel zu einem Phosphazenring zusammengefügt sind und n 3 oder 4, bevorzugt 3,
ist.

**3.** Zusammensetzungen nach einem der Ansprüche 1 oder 2,
**dadurch gekennzeichnet,**
daß der Rest X Sauerstoff ist.

**4.** Zusammensetzungen nach einem der Ansprüche 1 bis 3,
**dadurch gekennzeichnet,**
daß der Rest Y lineares oder verzweigtes $C_1$-$C_{10}$-Alkylen, $C_1$-$C_{10}$-Oxyalkylen, $C_1$-$C_{10}$-Alkylenphenyl, $C_1$-$C_{10}$-Alkylencarboxyphenyl, Phenylen, Biphenylen, Alkoxyphenylen oder Oxyphenylen ist.

**5.** Zusammensetzungen nach einem der Ansprüche 1 bis 4,
**dadurch gekennzeichnet,**
daß der Rest Y

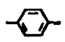 $CH_2$-, 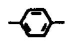 O-$CH_2$-, 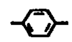 O-$C_2H_4$-,

1,4-Phenylen, $C_1$-$C_{10}$-Alkylphenylen oder $C_1$-$C_{10}$-Alkylcarboxylphenylen ist.

**6.** Zusammensetzungen nach einem der Ansprüche 1 bis 5,
**dadurch gekennzeichnet,**
daß n gleich 3 ist und 2, 3 oder 4 der Reste Z Acrylat- oder Methacrylatreste sind.

**7.** Verwendung von Phosphazenderivaten gemäß Anspruch 1 zur Herstellung von aushärtbarer Zusammensetzung für Lacke, Beschichtungsmittel, Füllmittel, Spachtelmasse, Klebstoffe, Formteile oder Folien.

**8.** Verwendung nach Anspruch 7,
**dadurch gekennzeichnet,**
daß zusätzlich wenistens ein Vernetzer verwendet wird mit wenigstens zwei funktionellen Gruppen, die mit den funktionellen Resten Z des Phosphazenderivates reagieren können.